# DEMANDE DE BREVET EUROPEEN

(11) **EP 4 537 997 A1**
(43) Date de publication de la demande: **16.04.2025**
(21) Numéro de dépôt: 24205043.3
(22) Date de dépôt: 07.10.2024
(51) Int. Cl.: B25J 9/14, B25J 11/00, B25J 15/00, B25J 15/02, B25J 15/04, B25J 19/00

(54) **SYSTÈME DE COUPLAGE MÉCANIQUE ET ENSEMBLE COMPRENANT UN TEL SYSTÈME ET DISPOSITIF DE PRÉHENSION**

(30) Priorité: 10.10.2023 FR 2310845
(71) Demandeur: Velec Systems, 59150 Wattrelos (FR)
(72) Inventeur: MASUREL, Maxence, 59150 WATTRELOS (FR); CHADENET, Victor-Henri, 59150 WATTRELOS (FR); GHESTEM, Florian, 59150 WATTRELOS (FR); CHATELAIN, Pierre-Louis, 59150 WATTRELOS (FR)
(74) Mandataire: Plasseraud IP

(57) **Abrégé**

La présente divulgation est relative à un système de couplage mécanique comprenant :
- une première partie de couplage (2), comprenant un premier corps (20) configuré pour être manipulé par un système de manoeuvre, tel qu'un bras robotisé,
- une deuxième partie de couplage (3), comprenant un deuxième corps (30) configuré pour solidariser un dispositif de préhension
- un système de couplage fluidique comportant depuis au moins une entrée de fluide (E) débouchant du premier corps (20), et au moins un canal (Ca) comprenant:
- une première portion de canal (PC1), interne, s'étendant dans la masse du premier corps (20) depuis ladite au moins une entrée de fluide,
- une deuxième portion de canal (PC2), interne, s'étendant dans la masse du deuxième corps (30), le deuxième portion de canal (PC2) s'étend, suivant la longueur du canal, en prolongement fluidique de la première portion de canal (PC1).

## Description

La présente divulgation est relative à un système de couplage mécanique comprenant une première partie de couplage comprenant un premier corps configuré pour être manipulé par un système de manoeuvre, tel qu'un bras robotisé, et une deuxième partie de couplage, comprenant un deuxième corps configuré pour solidariser un dispositif de préhension, ains qu'un système de verrouillage configuré pour passer d'une position de verrouillage pour laquelle le premier corps et le deuxième corps sont verrouillés l'un à l'autre, et jusqu'à une position de déverrouillage autorisant la séparation de la première partie de couplage et de la deuxième partie de couplage.

La présente divulgation est encore relative à un ensemble comprend un tel système de couplage et un dispositif de préhension solidaire du deuxième corps, ainsi qu'à un système robotisé comprenant un tel ensemble dont le premier corps est solidaire d'un bras robotisé.

### Domaine technique

La présente divulgation relève du domaine système de couplage mécanique, amovible par séparation du premier corps et du deuxième corps, et configuré pour permettre un changement de dispositif de préhension à l'extrémité d'un bras robotisé, et plus particulièrement dans les systèmes robotisés trouvant une application particulière dans le domaine des lignes automatisées où les équipements sont susceptibles d'être en contact avec des produits alimentaires.

### Technique antérieure

Dans ce domaine alimentaire, l'état de la technique des systèmes robotisés dans le domaine des lignes automatisées connait de l'état de la technique de tels système de couplage, divers systèmes de verrouillage, facilitant pour l'opérateur les opérations de verrouillage et déverrouillage, et ainsi de changement de dispositif de préhension.

Selon les constatations de la Demanderesse, le dispositif de préhension embarque typiquement un ou plusieurs actionneurs pneumatiques qui nécessitent d'être raccordés par des tuyaux flexibles à un dispositif de commande, connecté à une source d'air comprimé.

Lors des opérations de maintenance, l'opérateur doit non seulement déverrouiller les deux parties du système de couplage, et afin de séparer physiquement le premier corps du deuxième corps, mais le retrait du dispositif de préhension nécessite encore de déconnecter les différentes flexibles s'étendant depuis le bras robotisé jusqu'aux actionneurs du dispositif de préhension, ce qui génère une perte de temps non seulement au démontage, mais encore au remontage lors que ces flexibles doivent être reconnectés.

La présente divulgation s'intéresse plus particulièrement à la résolution de ce problème, dans le contexte du domaine alimentaire pour lequel la Demanderesse travail à obtenir des équipements de nettoyabilité facilitée, limitant le risque de développement de pathogènes.

Au moins selon un mode de réalisation, la présente divulgation s'intéresse à la résolution de ce problème, ainsi qu'à l'amélioration de la compacité de l'ensemble comprenant le système de couplage et le dispositif de préhension, en particulier suivant une direction passant par un axe du système de couplage

### Résumé

La présente divulgation vient améliorer la situation.

Il est proposé un système de couplage mécanique comprenant :
- une première partie de couplage, comprenant un premier corps configuré pour être manipulé par un système de manoeuvre, tel qu'un bras robotisé,
- une deuxième partie de couplage, comprenant un deuxième corps configuré pour solidariser un dispositif de préhension,
- un système de verrouillage configuré pour passer d'une position de verrouillage pour laquelle le premier corps et le deuxième corps sont verrouillés l'un à l'autre, et jusqu'à une position de déverrouillage autorisant la séparation de la première partie de couplage et de la deuxième partie de couplage.

Selon la présente divulgation, le système de couplage est dans une ou plusieurs matière compatible(s) au contact alimentaire, et il comporte un système de couplage fluidique comportant depuis au moins une entrée de fluide débouchant du premier corps, et au moins un canal comprenant:
- une première portion de canal, interne, s'étendant dans la masse du premier corps depuis ladite au moins une entrée de fluide,
- une deuxième portion de canal, interne, s'étendant dans la masse du deuxième corps,
   et dans lequel dans ladite position de verrouillage, le deuxième portion de canal s'étend, suivant la longueur du canal, en prolongement fluidique de la première portion de canal, un moyen d'étanchéité assurant une étanchéité au fluide au niveau d'une zone de jonction entre la première portion de canal et la deuxième portion de canal.

Les caractéristiques exposées dans les paragraphes suivants peuvent, optionnellement, être mises en oeuvre, indépendamment les unes des autres ou en combinaison les unes avec les autres.

Selon un mode de réalisation, ledit au moins canal, en particulier au moins la première portion de canal et/ou la deuxième portion de canal présente une trajectoire curviligne, et en particulier la trajectoire curviligne s'étend suivant les trois dimensions de l'espace, ladite trajectoire étant non contenue dans un plan.

Selon un mode de réalisation, le canal comprenant, la première portion de canal et la deuxième portion de canal est dépourvu de canal auxiliaire, s'étendant latéralement depuis la première portion de canal ou depuis la deuxième portion de canal, le canal auxiliaire formant un bras mort non débouchant comportant une extrémité fermée par un bouchon, opposée à une extrémité débouchant dans la première portion de canal ou la deuxième portion de canal.

Selon un mode de réalisation, la deuxième portion de canal s'étend à l'extrémité opposée de l'entrée du canal jusqu'à une sortie de fluide débouchant du deuxième corps.

Selon un mode de réalisation, la première partie de couplage comprend un raccord connecté à l'entrée de fluide configuré pour la connexion fluidique d'un tuyau flexible, et le cas échéant, un raccord connecté à la sortie de fluide configuré pour la connexion fluidique d'un tuyau flexible, s'étendant en particulier jusqu'à un vérin pneumatique.

Selon un mode de réalisation, la deuxième portion de canal dudit au moins un canal s'étend jusqu'à une chambre de cylindre d'au moins un vérin intégré au système de couplage mécanique, ladite chambre de cylindre étant obtenue dans la masse dudit deuxième corps, ledit système de couplage mécanique comprenant un piston, interne à ladite chambre de cylindre, configuré pour être contraint au déplacement par une source de fluide comprimé alimenté depuis ladite entrée via ledit canal.

Selon un mode de réalisation, ledit vérin intégré est un vérin double effet, le piston divisant ladite chambre de cylindre en une première chambre et une deuxième chambre, ledit au moins un canal comportant :
- un canal de commande au déploiement connecté à la première chambre, comprenant la première portion de canal et la deuxième portion de canal débouchant dans la première chambre, d'un premier côté du piston, configuré pour être connecté à une source de fluide comprimé pour actionner en coulissement le piston dans un premier sens,
- un canal de commande à la rétractation connecté à la deuxième chambre, comprenant la première portion de canal et la deuxième portion de canal débouchant dans la deuxième chambre, d'un deuxième côté du piston, configuré pour être connecté à une source de fluide comprimé pour actionner en coulissement le piston dans un deuxième sens.

Selon un mode de réalisation, la deuxième partie de couplage comprend le deuxième corps à l'intérieur duquel la chambre de cylindre en cavité est obtenue, ainsi qu'une partie de couvercle, traversée par une tige solidaire du piston, ladite partie de couvercle fixée de manière amovible du deuxième corps pour autoriser l'insertion ou l'extraction du piston.

Selon un mode de réalisation, le premier corps et le deuxième corps sont dans une ou plusieurs matières synthétiques choisie(s) parmi :
- acide polyactique,
- polypropylène,
- poly(téréphtalate d'éthylène,
- polyamide, en particulier polylauroamide.

Selon un mode de réalisation, les surfaces extérieures dudit système, y compris du premier corps et du deuxième corps, sont lisses ; non planes, favorisant l'écoulement d'eau, dépourvues de cavités favorisant l'accumulation d'eau et le développement microbien, les surfaces extérieures présentant une rugosité Ra inférieure ou égale à 6 micromètres.

Selon un mode de réalisation, ledit système de verrouillage comporte :
- un mécanisme de serrage comprenant un premier mors et un deuxième mors solidaires du premier corps configurés pour venir enserrer le deuxième corps dans une position rapprochée des mors, et pour autoriser le découplage dans une position écartée des mors ou alternativement,
- un mécanisme de serrage comportant une ou plusieurs vis de serrage, traversant le premier corps , en vissage avec des taraudages d'alésages du deuxième corps, ou inversement, de préférence des alésages borgnes.

Selon un mode de réalisation, ledit système de verrouillage comporte un ou plusieurs mécanismes à grenouillère, le ou chaque mécanisme à grenouillère comportant une première bielle articulée en pivot selon un premier axe au premier corps, une deuxième bielle articulée en pivot sur la première bielle selon un deuxième axe, et une portion d'accrochage solidaire du deuxième corps, une portion d'accrochage sur laquelle peut s'accrocher, de manière amovible, une portion de la deuxième bielle, ladite deuxième bielle pivotante sur la portion d'accrochage suivant un troisième axe.

Ledit mécanisme de verrouillage est configuré pour verrouiller le premier corps contre le deuxième corps lors du pivotement de la première bielle lorsque le deuxième axe d'articulation entre les deux biellettes dépasse un point d'alignement entre les trois axes d'articulation consistant en le premier axe, le deuxième axe et le troisième axe et arrive en une position de butée stable.

La présente divulgation est encore relative à un ensemble comportant un système de couplage mécanique selon la présente divulgation, et un dispositif de préhension comprenant au moins actionneur pneumatique destiné à être couplé de manière fluidique à au moins une source d'air comprimé par ledit au moins un canal.

Selon un mode de réalisation dudit ensemble, le dispositif de préhension est configuré pour saisir un empilement de produits plats en appui sur une surface, comportant :
- une première ailes de saisie et une deuxième aile de saisi, inférieures, racleuses, orientées l'une vers l'autre, configurées pour passer d'une position écartée, de part et d'autre de l'empilement à saisir jusqu'à une position rapprochée pour laquelle lesdites ailes de saisie glissent sous ledit empilement en appui sur la surface, ainsi qu'un premier vérin pneumatique double effet, connecté par un premier canal et un deuxième canal dudit au moins canal, indépendants, pour la commande du premier vérin dans les deux sens,
- une première butées latérale et une deuxième butée latérale, mobiles, configurées pour passer d'une position écartée de part et d'autre de l'empilement à saisir jusqu'à une position rapprochée pour laquelle lesdites butées latérales viennent en appui contre deux flancs opposés de l'empilement, ainsi qu'un deuxième vérin pneumatique connecté par un troisième canal et un quatrième canal dudit au moins canal pour la commande du deuxième vérin dans les deux sens,
- une butée supérieure mobile, configurée pour passer d'une position relevée à distance d'une surface supérieure de l'empilement jusqu'à une position abaissée, pour laquelle l'empilement est pris en maintien, inférieurement par les deux ailes de saisie, et supérieurement par la butée supérieure, et un troisième vérin pneumatique, connecté par un cinquième canal et un sixième canal dudit au moins un canal pour la commande du troisième vérin dans les deux sens.

Selon un mode de réalisation dudit ensemble, ledit actionneur pneumatique, en particulier le troisième vérin, est ledit vérin intégré au système de couplage dont la chambre de cylindre est formée dans une cavité du deuxième corps, ledit cinquième canal et le sixième canal constitués respectivement par ledit canal de commande au déploiement et ledit canal de commande à la rétractation.

La présente divulgation est encore relative à un système robotisé, comprenant un ensemble selon la présente divulgation, et un bras robotisé solidaire de la première partie de couplage dudit système de couplage mécanique.

La présente divulgation est encore relative à un procédé de fabrication d'un système de couplage mécanique selon la présente divulgation ou d'un ensemble selon la présente divulgation dans lequel on obtient le premier corps y compris la première portion de canal et/ou le deuxième corps, y compris la deuxième portion de canal, par fabrication additive.

La présente divulgation est encore relative à l'utilisation dudit système de couplage selon la présente divulgation, ou dudit ensemble selon la présente divulgation, ou du système robotisé selon la présente divulgation, dans le domaine alimentaire, ledit deuxième corps solidaire d'un dispositif de préhension, pour la préhension de produits alimentaires tels notamment produits laitiers, charcuteries.

### Brève description des dessins

D'autres caractéristiques, détails et avantages apparaîtront à la lecture de la description détaillée ci-après, et à l'analyse des dessins annexés, sur lesquels :
**Fig. 1**

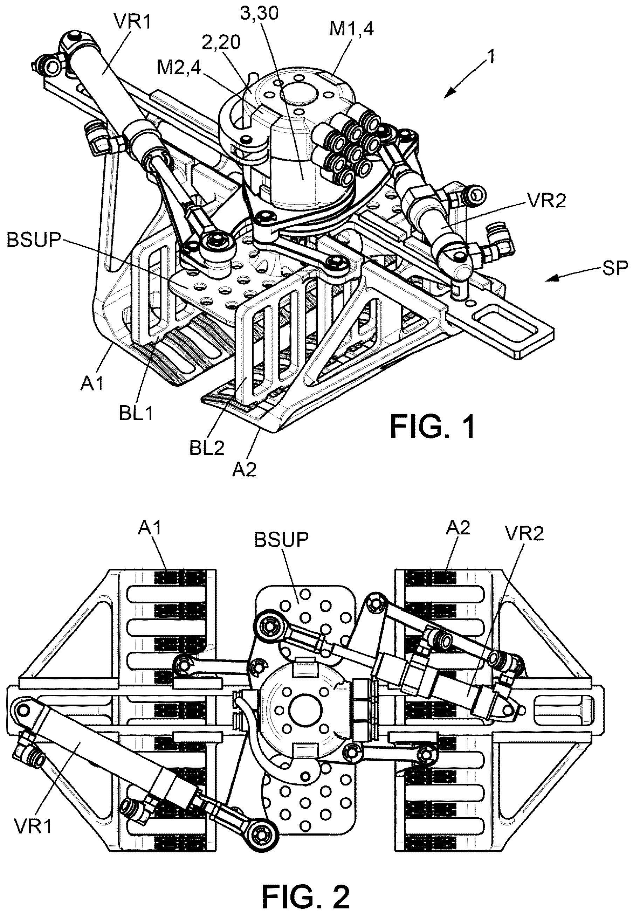

   [Fig. 1] est une vue en perspective d'un ensemble comprennent un système de couplage comprenant une première partie de couplage, et une deuxième partie de couplage, dans une position de verrouillage mécanique pour laquelle un premier corps et un deuxième corps sont solidarisés rigidement l'un à l'autre, le deuxième corps appartenant à la deuxième partie de couplage étant solidaire d'un système de préhension comprenant :
   - une première aile, et deuxième aile de saisie, racleuses, configurées pour glisser en dessous d'un objet à saisir, tel qu'un empilement de produits plats, actionnées au rapprochement et à l'écartement sous l'action d'un premier vérin pneumatique, double effet (flexibles non illustrés),
   - une première butée latérale, et une deuxième butée latérale configurées venir en contact avec deux flancs de l'empilement, actionnées au rapprochement et à l'écartement sous l'action d'un deuxième vérin pneumatique, double effet (flexibles non illustrés),
   - une butée supérieure mobile, verticalement actionnée à la descente ou à la montée par un troisième vérin pneumatique double effet, intégré au deuxième corps du système de couplage mécanique.
**Fig. 2**
   [Fig. 2] est une vue de dessus de l'ensemble selon la figure 1.
**Fig. 3**

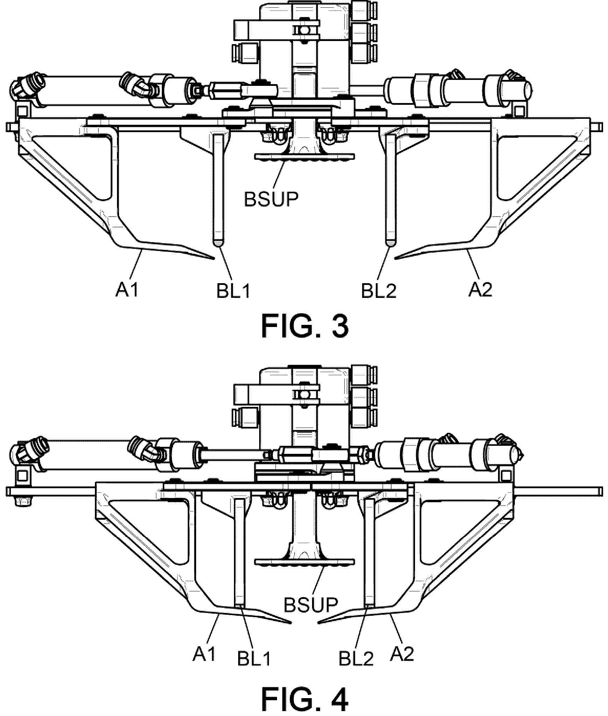

   [Fig. 3] est une vue de côté de l'ensemble :
   - les ailes de saisie, racleuses, en position écartée,
   - les butées latérales, en position écartée,
   - la butée supérieure en position remontée par rétraction du troisième vérin.
**Fig. 4**
   [Fig. 4] est une vue de la figure 3, les ailes de saisie et les butées latérales en positions rapprochées, et la butée supérieure en position abaissée.
**Fig. 5**

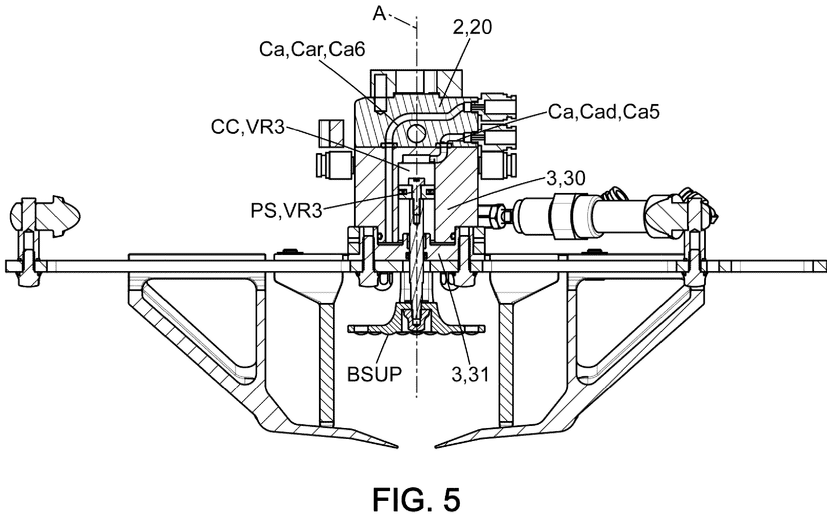

   [Fig. 5] est une vue de coupe, selon un plan vertical, illustrant un canal de commande au déploiement s'étendant depuis une entrée du premier corps, et jusqu'à une chambre de cylindre formée dans la masse du deuxième corps, d'un côté d'un piston, le canal configuré pour assurer la mise en pression du cylindre pour assurer le déplacement du piston dans un sens de déploiement d'une tige solidaire du piston, ainsi qu'un canal de commande à la rétractation, s'étendant depuis une autre entrée du premier corps, et jusqu'à ladite chambre de cylindre, de deuxième côté du piston, pour assurer le déplacement du piston dans le sens de rétraction de la tige.
**Fig. 6**

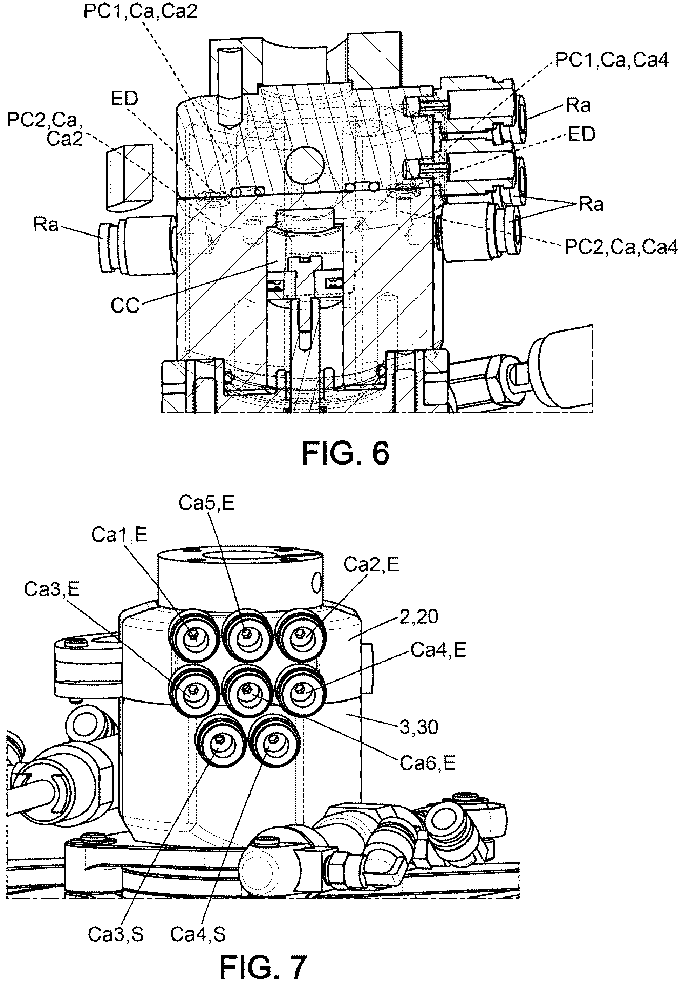

   [Fig. 6] est une vue de coupe selon un plan distinct de celui de la figure 5, illustrant deux canaux, chaque canal s'étendant depuis une entrée du premier corps, et jusqu'à une sortie du deuxième corps, les entrées et sorties comportant des raccords pour le raccordement de tuyaux flexibles, chaque canal comprenant une première portion de canal s'étendant dans le premier corps, prolongée, de manière fluidique par une deuxième portion de canal.
**Fig. 7**
   [Fig. 7] est une vue de côté du système de couplage, illustrant six entrées du premier corps appartenant respectivement à :
   - un premier canal et un deuxième canal configurés pour commander le premier vérin pneumatique respectivement dans le sens de rétractation et dans le sens de déploiement,
   - un troisième canal et un quatrième canal configurés pour commander le deuxième vérin pneumatique respectivement dans le sens de rétractation et dans le sens de déploiement,
   - un cinquième vérin et un sixième vérin pneumatique pour commander le troisième vérin pneumatique dans le sens de rétraction et dans le sens de déploiement,
   la vue illustrant deux sorties du deuxième corps appartenant aux troisième et quatrième canaux.
**Fig. 8**

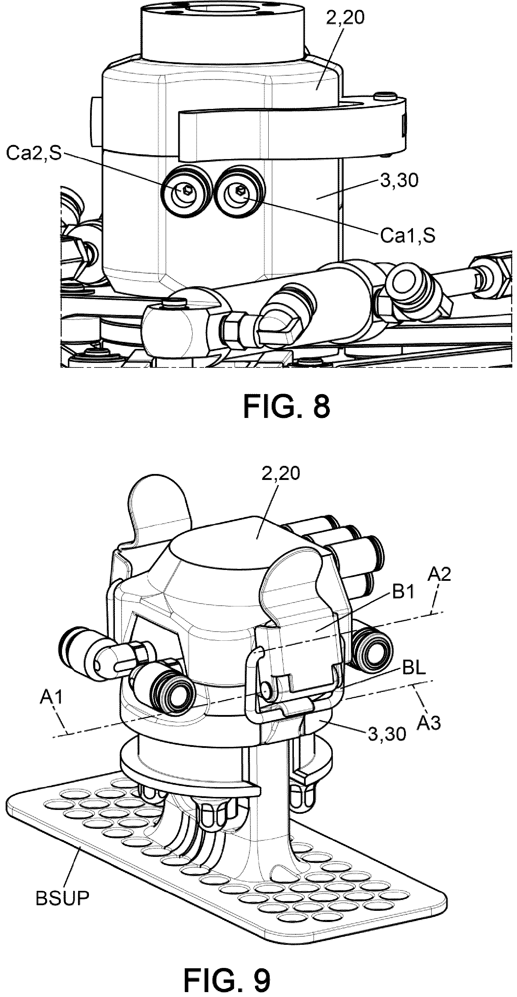

   [Fig. 8] est une vue de côté, diamétralement opposée à celle de la figure 7, illustrant deux sorties du deuxième corps appartenant respectivement aux premier et deuxième canaux.
**Fig. 9**

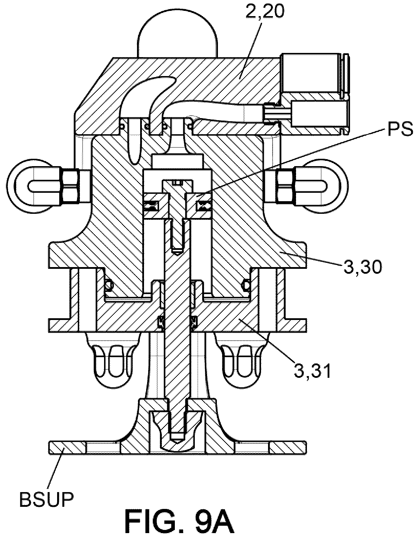

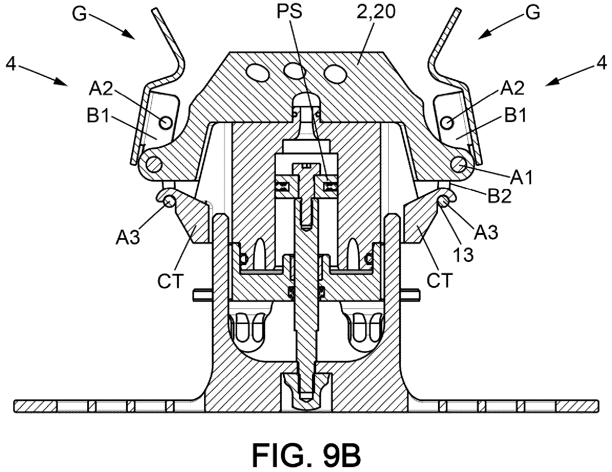

   [Fig. 9] est une vue en perspective d'un autre mode de réalisation du système de couplage mécanique comprenant deux mécanismes à grenouillère, diamétralement opposés pour assurer le verrouillage du premier corps contre le deuxième corps, mise en contact des joints en les canalisations internes des deux corps.
**Fig. 9A**
   [Fig. 9A] est une vue de coupe selon un premier plan passant par un axe du système de couplage.
**Fig. 9B**
   [Fig. 9B] est une vue de coupe selon un deuxième plan perpendiculaire au premier plan.

### Description des modes de réalisation

Il est maintenant fait référence à la figure 1.

Il est proposé un système de couplage mécanique 1 comprenant :
- une première partie de couplage 2, comprenant un premier corps 20 configuré pour être manipulé par un système de manoeuvre, tel qu'un bras robotisé,
- une deuxième partie de couplage 3, comprenant un deuxième corps 30 configuré pour solidariser un dispositif de préhension.

Le système de couplage comprend encore un système de verrouillage 4 configuré pour passer d'une position de verrouillage pour laquelle le premier corps 20 et le deuxième corps 30 sont verrouillés l'un à l'autre, en particulier l'un contre l'autre, et jusqu'à une position de déverrouillage autorisant la séparation de la première partie de couplage 2 et de la deuxième partie de couplage 3.

Il peut notamment système de verrouillage, comportant un mécanisme de serrage comprenant un premier mors M1 et un deuxième mors M2 solidaires du premier corps, les mors configurés pour venir enserrer le deuxième corps 30 dans une position rapprochée des mors M1, M2, et pour autoriser le découplage dans une position écartée des mors M1, M2 ou alternativement.

Le mécanisme peut comprend un système rapide comprenant un axe reliant les deux mors M1, M2, et sur lequel l'un de mors coulisse, et un levier de serrage, articulé, comprenant une portion de came configurée pour assurer le serrage des mors par effet de coin, et comme illustré à la figure 1.

Le mécanisme de serrage peut encore comporter (non illustré) une ou plusieurs vis de serrage, traversant le premier corps 20, en vissage avec des taraudages d'alésages du deuxième corps 30, ou inversement (à savoir respectivement que les alésages taraudés sont pratiqués sur le premier corps), les vis comportant des têtes en appui sur le premier corps (ou respectivement en appui sur le deuxième corps). Les alésages taraudés sont de préférence des alésages borgnes, et notamment afin d'éviter la présence d'interstice(s) dans lequel de l'humidité peut pénétrer et favoriser la présence d'eau stagnante favorable au développement de pathogènes.

Selon encore un autre mode de réalisation, illustré aux figures 9, 9A et 9B, ledit système de verrouillage peut comporter un ou plusieurs mécanismes à grenouillère. Le ou chaque mécanisme à grenouillère G comporte une première bielle B1 articulée en pivot selon un premier axe A1 au premier corps 2, une deuxième bielle B2 articulée en pivot sur la première bielle B1 selon un deuxième axe A2.

Une portion d'accrochage CT est alors solidaire du deuxième corps 30 sur laquelle peut s'accrocher de manière amovible, une portion de la deuxième bielle B2, ladite deuxième bielle B2 alors pivotante sur la portion d'accrochage CT suivant un troisième axe A3.

Un tel mécanisme de verrouillage est configuré pour verrouiller le premier corps 20 contre le deuxième 30 lors du pivotement de la première bielle lorsque le deuxième axe A2 d'articulation entre les deux biellettes B1, B2 dépasse un point d'alignement entre les trois axes d'articulation consistant en le premier axe A1, le deuxième axe A2 et le troisième axe A3, et que ledit deuxième axe A2 arrive en une position de butée stable. Les positions de de la portion d'accrochage et des leviers peuvent être inversées, à savoir que la portion d'accrochage peut être solidaire du premier corps, et le premier levier articulé sur le deuxième corps.

Le système de verrouillage comporte typiquement deux mécanismes à grenouillère, répartis diamétralement opposés de part et d'autre de l'axe A.

Un tel système de verrouillage présente pour intérêt une rapidité de mise en oeuvre pour verrouiller (ou déverrouiller) les deux corps 20,30 par déplacement de la première bielle B1, qui peut présenter à cet effet une portion de préhension, dans un premier sens jusqu'à la position de butée de stable lors du verrouillage, ou dans un sens opposé lors du déverrouillage pour autoriser l'échappement de la deuxième bielle B2 de la portion d'accrochage PC, et ainsi la séparation des deux corps 20, 30.

De manière notable, le système de couplage comporte un système de couplage fluidique comportant depuis au moins une entrée de fluide E débouchant du premier corps 20, et au moins un canal Ca comprenant:
- une première portion de canal PC1, interne, s'étendant dans la masse du premier corps 20 depuis ladite au moins une entrée de fluide E,
- une deuxième portion de canal PC2, interne, s'étendant dans la masse du deuxième corps 30, et dans lequel dans ladite position de verrouillage, la deuxième portion de canal PC2 s'étend, suivant la longueur du canal, en prolongement fluidique de la première portion de canal PC1. Un moyen d'étanchéité ED assure une étanchéité au fluide au niveau d'une zone de jonction entre la première portion de canal PC1 et la deuxième portion de canal PC2.

Le moyen d'étanchéité ED peut comprendre typiquement un joint annulaire, solidaire du premier corps ou du deuxième corps, venant être pincé entre le premier corps 20 et le deuxième corps 30, pour assurer une liaison étanche à la jonction entre la première portion de canal 20 et la deuxième portion de canal 30.

Ladite entrée de fluide E est typiquement associée de manière fluidique à un tuyau flexible du bras robotisé.

Le nombre de canaux Ca dépend typiquement du nombre d'actionneurs pneumatiques à alimenter sur le dispositif de préhension et dépend encore de la nature de l'actionneur pneumatique à savoir notamment si il s'agit d'un actionneur simple effet, nécessitant une seule alimentation de fluide, ou double effet, nécessitant deux alimentations indépendantes.

Le nombre de canal peut être un canal, voire plusieurs canaux, tels que six canaux selon l'exemple illustré qui nécessite de la commande de trois actionneurs double effet.

Dans tous les cas, le système de couplage fluidique facilite grandement les opérations de séparation entre la première partie solidaire d'un bras robotisé et la deuxième partie du système de couplage, solidaire du dispositif de préhension et plus généralement en ce qu'il n'est plus nécessaire de découpler le ou les tuyaux flexibles qui restent toujours connecté (s) à l'entrée E ou les entrées E. Les opérations de démontage (et de remontage) du dispositif de préhension par rapport au bras robotisé sont grandement simplifiées.

Selon un mode de réalisation, ledit au moins canal Ca, en particulier au moins la première portion de canal PC1 et/ou la deuxième portion de canal PC2 présente une trajectoire curviligne. En particulier ladite trajectoire curviligne s'étend suivant les trois dimensions de l'espace, ladite trajectoire étant non contenue dans un plan.

En particulier, le canal selon ce mode de réalisation ne résulte pas d'un perçage, rectiligne par nature, ou de la combinaison de plusieurs perçages s'intersectant pour assurer un changement de direction, et qui a pour conséquence des arêtes vives au niveau de la zone de changement de direction, difficile à nettoyer, et favorisant le développement de pathogènes.

De plus, la combinaison de deux perçages peut nécessiter d'obturer un orifice par un obturateur typiquement vissée dans un taraudage dudit orifice, aboutissant à la présence d'un bras mort favorable à la stagnation d'humidité et ainsi au développement de pathogènes.

Ainsi, et de manière, le canal Ca comprenant la première portion de canal PC1 et la deuxième portion de canal PC2 est dépourvu de canal auxiliaire, s'étendant latéralement depuis la première portion de canal PC1 ou depuis la deuxième portion de canal PC2, le canal auxiliaire formant un bras mort non débouchant comportant une extrémité fermée par un bouchon, opposée à une extrémité débouchant dans la première portion de canal ou la deuxième portion de canal.

Autrement dit, les canaux internes du système de couplage mécanique ne communiquent à l'extérieur qu'au niveau de la ou les entrées E de fluides raccordées à une plusieurs sources d'air comprimé, voire de la ou les sorties de fluides raccordés aux actionneurs pneumatiques. Les canaux internes ne comportent par un orifice communiquant vers l'extérieur du premier corps et deuxième corps qui est obturé par un bouchon typiquement vissé dans un taraudage, et tel qu'ils sont typiquement rencontrés dans le domaine des système de couplage du domaine des systèmes robotisés pour application non-alimentaire, lorsque les canaux internes résultent de plusieurs perçages s'intersectant pour assurer un changement de direction et en particulier selon un état de la technique non compatible avec les exigences de nettoyabilité dans le domaine alimentaire.

Une trajectoire curviligne dudit au moins canal Ca peut être typiquement obtenu par fabrication additive, typiquement par impression 3D.

De manière générale, le système de couplage, y compris le premier corps 20 et le deuxième corps 30 peuvent être dans une matière synthétique choisie parmi :
- acide polyactique (abrégé anglais PLA),
- polypropylène (PP),
- poly(téréphtalate d'éthylène), abrégé en anglais PET,
- polyamide, en particulier Polylauroamide (PA12).

Ces matériaux sont compatibles avec une fabrication additive, typiquement par impression 3D. Le matériau est par ailleurs compatible au contact alimentaire en particulier au sens de règlement (CE) n° 1935/2004 du 27 octobre 2004 et au sens de la FDA Food and Drug Administration.

Selon un mode de réalisation, la deuxième portion de canal PC2 s'étend à l'extrémité de l'entrée du canal jusqu'à une sortie S de fluide débouchant du deuxième corps 30. La sortie S est typiquement associée à un raccord Ra pour un tuyau flexible, reliant typiquement la sortie à un actionneur ou vérin pneumatique du dispositif de préhension.

Toutefois le canal ne débouche pas forcément du deuxième corps par une sortie, par exemple lorsque la deuxième partie de couplage 3 comporte un actionneur pneumatique intégré au deuxième corps 30, et comme notamment illustré selon un mode de réalisation possible à la figure 5.

Ainsi, la deuxième portion de canal PC2 dudit au moins un canal peut s'étendre jusqu'à une chambre de cylindre CC d'un vérin intégré au système de couplage mécanique, ladite chambre de cylindre étant obtenue dans la masse dudit deuxième corps 20, typiquement obtenu par fabrication additive. Le deuxième corps 20 peut ainsi comprendre un vérin intégré, comme notamment illustré aux figures, ou encore plusieurs vérins intégrés, chacun des vérins comportant une chambre de cylindre étant obtenue dans la masse dudit deuxième corps 20, typiquement obtenu par fabrication additive.

Le système de couplage mécanique comprend alors un piston PS (voire plusieurs pistons), interne à ladite chambre de cylindre, appartenant au vérin, configuré pour être contraint au déplacement par une source de fluide comprimé alimenté depuis ladite entrée E via ledit canal Ca.

Ledit vérin intégré peut être un vérin double effet, le piston PS divisant ladite chambre de cylindre en une première chambre et une deuxième chambre, ledit au moins un canal comportant :
- un canal de commande au déploiement Cad connecté à la première chambre, comprenant la première portion de canal PC1 et la deuxième portion de canal PC2 débouchant dans la première chambre, d'un premier côté du piston PS, configuré pour être connecté à une source de fluide comprimé pour actionner en coulissement le piston dans un premier sens (au déploiement),
- un canal de commande à la rétractation Car connecté à la deuxième chambre, comprenant la première portion de canal PC1 et la deuxième portion de canal PC2 débouchant dans la deuxième chambre, d'un deuxième côté du piston, configuré pour être connecté à une source de fluide comprimé pour actionner en coulissement le piston dans un deuxième sens (à la rétractation).

Selon un mode de réalisation, le vérin intégré peut être orienté sensiblement coaxialement à l'axe du système de couplage mécanique comportant le premier corps et le deuxième corps. Par comparaison à une conception pour laquelle le système de couplage et le vérin pneumatique (non intégré) seraient simplement juxtaposés, disposer d'une conception intégrée du vérin permet de diminuer la compacité suivant l'axe A du système de couplage mécanique. Encore un autre avantage est que la nettoyabilité est grandement améliorée.

De manière générale, la deuxième partie de couplage 3 peut comprendre le deuxième corps 30 à l'intérieur duquel la chambre de cylindre en cavité est obtenue, ainsi qu'une partie de couvercle 31, traversée par une tige de vérin solidaire du piston PS. Ladite partie de couvercle 31 est fixée de manière amovible du deuxième corps 30 pour autoriser l'insertion ou l'extraction du piston PS. La partie de couvercle comprend une ouverture pour le passage de la tige du vérin, ainsi qu'un système d'étanchéité assurant une étanchéité entre la partie de couvercle 31 et la tige du vérin.

Selon un deuxième aspect, la présente divulgation est relative à un ensemble comportant un système de couplage mécanique 1 selon la présente divulgation, et un dispositif de préhension SP comprenant au moins actionneur pneumatique destiné à être couplé de manière fluidique à au moins une source d'air comprimé par ledit au moins un canal Ca.

Lorsque ledit au moins actionneur est externe audit système de couplage mécanique, à savoir que le vérin est non intégré, au moins un tuyau flexible relie ledit actionneur pneumatique à raccord Ra d'une sortie S du deuxième corps 30.

Lorsque l'actionneur est intégré, comme précédemment expliqué, le canal Ca relie directement la chambre de cylindre CC formée par une cavité dans le deuxième corps 30.

Selon un mode de réalisation, le dispositif de préhension est configuré pour saisir un empilement de produits plats en appui sur une surface, ledit dispositif de préhension comportant :
- une première aile de saisie A1 et une deuxième aile de saisie A2, inférieures, racleuses, orientées l'une vers l'autre, configurées pour passer d'une position écartée, de part et d'autre de l'empilement à saisir jusqu'à une position rapprochée pour laquelle lesdites ailes de saisie A1, A2 glissent sous ledit empilement en appui sur la surface, typiquement en raclant la surface, ainsi qu'un premier vérin pneumatique VR1 double effet, connecté par un premier canal Ca1 et un deuxième canal Ca2 dudit au moins canal, indépendants, pour la commande du premier vérin dans les deux sens,
- une première butée latérale BL1 et une deuxième butée latérale BL2 mobiles, configurées pour passer d'une position écartée de part et d'autre de l'empilement à saisir jusqu'à une position rapprochée pour laquelle lesdites butées latérales BL1, BL2 viennent en appui contre deux flancs opposés de l'empilement, ainsi qu'un deuxième vérin pneumatique VR2 connecté par un troisième canal Ca3 et un quatrième canal Ca4 dudit au moins canal Ca pour la commande du deuxième vérin VR2 dans les deux sens,
- une butée supérieure BSUP mobile, configurée pour passer d'une position relevée à distance d'une surface supérieure de l'empilement jusqu'à une position abaissée, pour laquelle l'empilement est pris en maintien, inférieurement par les deux ailes de saisie A1, A2, et supérieurement par la butée supérieure BSUP, et un troisième vérin pneumatique VR3, connecté par un cinquième canal Ca5 et un sixième canal Ca6 dudit au moins un canal Ca pour la commande du troisième vérin VR3 dans les deux sens.

On remarque avantageusement qu'en particulier le troisième vérin VR3, peut être ledit vérin intégré au système de couplage dont la chambre de cylindre CC est formée dans une cavité du deuxième corps 30, ledit cinquième canal Ca5 et le sixième canal Ca6 constitués respectivement par ledit canal de commande au déploiement Cad et ledit canal de commande à la rétractation Car. Dans un tel cas la butée e BSUP est solidaire de l'extrémité de la tige solidaire du piston PS interne au deuxième corps 30.

Un tel dispositif de préhension permet la saisie d'un empilement de produits plats, par exemple du fromage, de la charcuterie, ou autres; selon une séquence de saisie comprenant :
- un positionnement du dispositif de préhension, les deux ailes de saisie A1, A2 en position écartée, de part et d'autre d'un empilement à saisir en appui sur une surface de support,
- un rapprochement de la première aile de saisie A1 et de la deuxième aile de saisie A2, en raclant la surface de support, jusqu'à glissement de la première aile A1 et de la deuxième aile A2 sous l'empilement, par une commande du premier vérin pneumatique VR1,
- un rapprochement de la première butée latérale BL1 et de la deuxième butée latérale BL2, venant en contact respectivement avec deux flancs opposés de l'empilement, en particulier afin d'assurer un centrage des différents produits superposés formant l'empilement, par une commande du deuxième vérin pneumatique VR2,
- un abaissement de la butée supérieure par la commande du troisième vérin, jusqu'à maintenir en en prise l'empilement enserré entre, d'une part, la butée supérieure BSUP par un appui supérieur sur le produit supérieur de l'empilement, et d'autre part, les deux ailes de saisie A1 et A2, par un appui sur le produit inférieur de l'empilement.

Une fois saisi et maintenu, l'empilement peut être déplacé par le bras robotisé, et jusqu'à son relâchement, par exemple dans un emballage, tel qu'une barquette thermoformée, sans risque que l'empilement se détériore.

La présente divulgation est encore relative à un système robotisé, comprenant un ensemble selon la présente divulgation, et un bras robotisé solidaire de la première partie de couplage dudit système de couplage mécanique. Le bras robotisé comporte en particulier un ou plusieurs flexibles connectés à un ou plusieurs raccord Ra associés au(x) s de fluide E.

Lorsque le dispositif de préhension est séparé du bras robotisé, par déverrouillage du mécanisme de verrouillage 4 autorisant la séparation de la première partie de couplage amovible 2, et la deuxième partie de couplage 3, le système de couplage fluidique permet de découpler fluidiquement et automatiquement le dispositif de préhension du bras robotisé, en particulier les flexibles connectés au(x) raccord Ra des entrées E, ainsi que les flexibles connectés au(x) raccords des sorties S pouvant rester connectés à demeure.

### Application industrielle

La présente divulgation concerne encore un procédé de fabrication d'un système de couplage mécanique selon la présente divulgation, ou d'un ensemble selon la présente divulgation dans lequel on obtient le premier corps y compris la première portion de canal PC1 et/ou le deuxième portion de canal PC2, par fabrication additive.

La présente divulgation concerne encore l'utilisation dudit système de couplage selon la présente divulgation ou dudit ensemble selon la présente divulgation, ou du système robotisé selon la présente divulgation, dans le domaine alimentaire, ledit deuxième corps 30 solidaire d'un dispositif de préhension SP, pour la préhension de produits alimentaires.

Les produits alimentaires peuvent être des produits laitiers (fromage), produits de charcuterie, ou autres.

Autant que possible, la surface externe du premier corps 2 et celle du deuxième corps 3 sont dépourvus d'Interstices favorisant la rétention d'eau favorable au développement de pathogènes, ou encore d'arêtes vives, qui pénalisent la nettoyabilité.

Au contraire, les surfaces extérieures sont de préférence lisses, non planes, favorisant l'écoulement d'eau : la surface extérieure du dispositif est dépourvue de cavités ou tout autre surface favorisant l'accumulation d'eau et le développement de pathogènes. La rugosité Ra des surfaces extérieures est de préférence inférieure ou égale à 6 micromètres. Un tel système de couplage peut être facilement nettoyé par aspersion d'eau, voire d'une solution nettoyante, sans risque que de l'eau ne s'accumule sur les surfaces extérieures du système du couplage, voire dans des cavités du système de couplage, et ne favorise le développement de pathogènes.

### Liste des signes de référence

- 1 : Système de couplage mécanique,
- 2. Première partie de couplage,
- 20. Premier corps,
- 3. Deuxième partie de couplage,
- 30. Deuxième corps,
- 4. Système de verrouillage,
- G mécanisme à grenouillère,
- B1, B2. Première bielle et deuxième bielle (grenouillère),
- PC. Portion d'accrochage
- A1. Premier axe d'articulation (de la première bielle sur le premier corps)
- A2. Deuxième axe d'articulation (entre la première bielle et la deuxième bielle),
- A3. Troisième axe d'articulation entre la deuxième bielle et la portion d'accrochage,
- A. Axe du système de couplage,
- E. Entrée(s) de fluide,
- ED. Moyens d'étanchéité,
- S. Sortie(s) de fluide,
- Ca. Au moins un canal,
- Ca1, Ca2, Ca3, Ca4, Ca5, Ca6. Respectivement premier, deuxième, troisième, quatrième, cinquième et sixième canal,
- Cad. Canal de commande au déploiement,
- Car. Canal de commande à la rétractation,
- CC. Chambre de cylindre (intégré au deuxième corps)
- PS. Piston,
- Ra. Raccord,
- M1, M2. Premier et deuxième mors,
- SP. Système de préhension,
- A1, A2. Première aile de saisie et deuxième aile de saisie, racleuses
- BL1, BL2. Première butée latérale, et deuxième butée latérale,
- BSUP. Butée supérieure,
- VR1, VR2, VR3. Premier, deuxième et troisième vérin pneumatique.

## Revendications

1. Système de couplage mécanique (1) comprenant :
- une première partie de couplage (2), comprenant un premier corps (20) configuré pour être manipulé par un système de manoeuvre, tel qu'un bras robotisé,
- une deuxième partie de couplage (3), comprenant un deuxième corps (30) configuré pour solidariser un dispositif de préhension
- un système de verrouillage (4) configuré pour passer d'une position de verrouillage pour laquelle le premier corps (20) et le deuxième corps (30) sont verrouillés l'un à l'autre, et jusqu'à une position de déverrouillage autorisant la séparation de la première partie de couplage (2) et de la deuxième partie de couplage (3)
**caractérisé en ce qu'il** est dans une ou plusieurs matière compatible(s) au contact alimentaire, et qu'il comporte un système de couplage fluidique comportant depuis au moins une entrée de fluide (E) débouchant du premier corps (20), et au moins un canal (Ca) comprenant:
- une première portion de canal (PC1), interne, s'étendant dans la masse du premier corps (20) depuis ladite au moins une entrée de fluide,
- une deuxième portion de canal (PC2), interne, s'étendant dans la masse du deuxième corps (30), et dans lequel dans ladite position de verrouillage, le deuxième portion de canal (PC2) s'étend, suivant la longueur du canal, en prolongement fluidique de la première portion de canal (PC1), un moyen d'étanchéité (ED) assurant une étanchéité au fluide au niveau d'une zone de jonction entre la première portion de canal (PC1) et la deuxième portion de canal (PC2).

2. Système de couplage mécanique, selon la revendication 1, dans lequel ledit au moins canal (Ca), en particulier au moins la première portion de canal (PC1) et/ou la deuxième portion de canal (PC2) présente une trajectoire curviligne.

3. Système de couplage mécanique, selon la revendication 2, dans lequel ladite trajectoire curviligne s'étend suivant les trois dimensions de l'espace, ladite trajectoire étant non contenue dans un plan.

4. Système de couplage mécanique, selon l'une des revendications 1 à 3, dans lequel le canal (Ca) comprenant la première portion de canal (PC1) et la deuxième portion de canal (PC2) est dépourvu de canal auxiliaire, s'étendant latéralement depuis la première portion de canal (PC1) ou depuis la deuxième portion de canal (PC2), le canal auxiliaire formant un bras mort non débouchant comportant une extrémité fermée par un bouchon, opposée à une extrémité débouchant dans la première portion de canal ou la deuxième portion de canal.

5. Système de couplage mécanique selon l'une des revendications 1 à 4, dans lequel la deuxième portion de canal (PC2) s'étend à l'extrémité opposée de l'entrée du canal jusqu'à une sortie (S) de fluide débouchant du deuxième corps (30).

6. Système de couplage mécanique, selon l'une des revendications 1 à 5, dans la première partie de couplage (2) comprend un raccord (Ra) connecté à l'entrée de fluide configuré pour la connexion fluidique d'un tuyau flexible, et le cas échéant lorsque le système est selon la revendication 5, un raccord (Ra) connecté à la sortie de fluide (S) configuré pour la connexion fluidique d'un tuyau flexible, s'étendant en particulier jusqu'à un vérin pneumatique.

7. Système de couplage mécanique, selon l'une des revendications 1 à 6, dans lequel la deuxième portion de canal (PC2) dudit au moins un canal s'étend jusqu'à une chambre de cylindre (CC) d'au moins un vérin intégré au système de couplage mécanique, ladite chambre de cylindre étant obtenue dans la masse dudit deuxième corps (20), ledit système de couplage mécanique comprenant un piston (PS), interne à ladite chambre de cylindre, configuré pour être contraint au déplacement par une source de fluide comprimé alimenté depuis ladite entrée via ledit canal (Ca).

8. Système de couplage mécanique selon la revendication 7, dans lequel ledit vérin intégré est un vérin double effet, le piston divisant ladite chambre de cylindre en une première chambre et une deuxième chambre, ledit au moins un canal comportant :
- un canal de commande au déploiement (Cad) connecté à la première chambre, comprenant la première portion de canal (PC1) et la deuxième portion de canal (PC2) débouchant dans la première chambre, d'un premier côté du piston (PS), configuré pour être connecté à une source de fluide comprimé pour actionner en coulissement le piston dans un premier sens,
- un canal de commande à la rétractation (Car) connecté à la deuxième chambre, comprenant la première portion de canal (PC1) et la deuxième portion de canal (PC2) débouchant dans la deuxième chambre, d'un deuxième côté du piston, configuré pour être connecté à une source de fluide comprimé pour actionner en coulissement le piston dans un deuxième sens.

9. Système de couplage selon la revendication 7 ou 8, dans la deuxième partie de couplage (3) comprenant le deuxième corps (30) à l'intérieur duquel la chambre de cylindre en cavité est obtenue, ainsi qu'une partie de couvercle (31), traversée par une tige solidaire du piston (PS), ladite partie de couvercle (31) fixée de manière amovible du deuxième corps (30) pour autoriser l'insertion ou l'extraction du piston (PS).

10. Système de couplage mécanique selon l'une des revendications 1 à 9, dans lequel le premier corps (20) et le deuxième corps (30) sont dans une ou plusieurs matières synthétiques choisie(s) parmi :
- acide polyactique,
- polypropylène,
- poly(téréphtalate d'éthylène,
- polyamide, en particulier polylauroamide.

11. Système de couplage selon l'une des revendications 1 à 10, dans lequel les surfaces extérieures dudit système, y compris du premier corps et du deuxième corps, sont lisses ; non planes, favorisant l'écoulement d'eau, dépourvues de cavités favorisant l'accumulation d'eau et le développement microbien, les surfaces extérieures présentant une rugosité Ra inférieure ou égale à 6 micromètres.

12. Système de couplage mécanique selon l'une des revendications 1 à 11, dans lequel ledit système de verrouillage comporte :
- un mécanisme de serrage comprenant un premier mors (M1) et un deuxième mors (M2) solidaires du premier corps configurés pour venir enserrer le deuxième corps (30) dans une position rapprochée des mors (M1,M2), et pour autoriser le découplage dans une position écartée des mors (M1, M2) ou alternativement,
- un mécanisme de serrage comportant une ou plusieurs vis de serrage, traversant le premier corps (20), en vissage avec des taraudages d'alésages du deuxième corps (30), ou inversement, de préférence des alésages borgnes.

13. Système de couplage mécanique selon l'une des revendications 1 à 11, dans lequel ledit système de verrouillage comporte un ou plusieurs mécanismes à grenouillère, le ou chaque mécanisme à grenouillère (G) comportant une première bielle (B1) articulée en pivot selon un premier axe (A1) au premier corps (2), une deuxième bielle (B2) articulée en pivot sur la première bielle (B1) selon un deuxième axe (A2), et une portion d'accrochage (CT) solidaire du deuxième corps (30), sur laquelle peut s'accrocher de manière amovible, une portion de la deuxième bielle (B2), ladite deuxième bielle (B2) pivotante sur la portion d'accrochage (CT) suivant un troisième axe (A3)
et dans lequel ledit mécanisme de verrouillage est configuré pour verrouiller le premier corps (20 contre le deuxième (30) lors du pivotement de la première bielle lorsque le deuxième axe (A2) d'articulation entre les deux biellettes (B1, B2) dépasse un point d'alignement entre les trois axes d'articulation consistant en le premier axe, le deuxième axe et le troisième axe et arrive en une position de butée stable.

14. Ensemble comportant un système de couplage mécanique (1) selon l'une des revendications 1 à 13, et un dispositif de préhension (SP) comprenant au moins actionneur pneumatique destiné à être couplé de manière fluidique à au moins une source d'air comprimé par ledit au moins un canal (Ca).

15. Ensemble selon la revendication 14 dans lequel le dispositif de préhension est configuré pour saisir un empilement de produits plats en appui sur une surface, comportant :
- une première ailes de saisie (A1) et une deuxième aile de saisi (A2), inférieures, racleuses, orientées l'une vers l'autre, configurées pour passer d'une position écartée, de part et d'autre de l'empilement à saisir jusqu'à une position rapprochée pour laquelle lesdites ailes de saisie (A1, A2) glissent sous ledit empilement en appui sur la surface, ainsi qu'un premier vérin pneumatique (VR1) double effet, connecté par un premier canal (Ca1) et un deuxième canal (Ca2) dudit au moins canal, indépendants, pour la commande du premier vérin dans les deux sens,
- une première butées latérale (BL1) et une deuxième butée latérale (BL2), mobiles, configurées pour passer d'une position écartée de part et d'autre de l'empilement à saisir jusqu'à une position rapprochée pour laquelle lesdites butées latérales (BL1, BL2) viennent en appui contre deux flancs opposés de l'empilement, ainsi qu'un deuxième vérin pneumatique (VR2) connecté par un troisième canal (Ca3) et un quatrième canal (Ca4) dudit au moins canal (Ca) pour la commande du deuxième vérin (VR2) dans les deux sens,
- une butée supérieure (BSUP) mobile, configurée pour passer d'une position relevée à distance d'une surface supérieure de l'empilement jusqu'à une position abaissée, pour laquelle l'empilement est pris en maintien, inférieurement par les deux ailes de saisie (A1, A2), et supérieurement par la butée supérieure (BSUP), et un troisième vérin pneumatique (VR3), connecté par un cinquième canal (Ca5) et un sixième canal (Ca6) dudit au moins un canal (Ca) pour la commande du troisième vérin (VR3) dans les deux sens.

16. Ensemble selon l'une des revendications 7 à 9 en combinaison avec la revendication 14 ou 15 dans lequel ledit actionneur pneumatique, en particulier le troisième vérin (VR3), est ledit vérin intégré au système de couplage dont la chambre de cylindre (CC) est formée dans une cavité du deuxième corps (30), ledit cinquième canal (Ca5) et le sixième canal (Ca6) constitués respectivement par ledit canal de commande au déploiement (Cad) et ledit canal de commande à la rétractation (Car).

17. Système robotisé, comprenant un ensemble selon l'une des revendications 14 à 16, et un bras robotisé solidaire de la première partie de couplage (2) dudit système de couplage mécanique.

18. Procédé de fabrication d'un système de couplage mécanique selon l'une des revendications 1 à 13, ou d'un ensemble selon l'une des revendications 14 à 16 dans lequel on obtient le premier corps y compris la première portion de canal (PC1) et/ou le deuxième corps (PC2), y compris la deuxième portion de canal (PC2), par fabrication additive.

19. Utilisation dudit système de couplage selon l'une des revendications 1 à 13, ou dudit ensemble selon l'une des revendications 14 à 16, ou du système robotisé selon la revendication 17, dans le domaine alimentaire, ledit deuxième corps (30) solidaire d'un dispositif de préhension (SP), pour la préhension de produits alimentaires tels notamment produits laitiers, charcuteries.
